# EUROPEAN PATENT SPECIFICATION

(11) **EP 4 153 367 B1**
(45) Date of publication and mention of the grant of the patent: **31.07.2024**
(21) Application number: 21723923.5
(22) Date of filing: 09.04.2021
(51) Int. Cl.: B09B 3/00, B02C 18/02, B02C 23/02, B09B 5/00, B02C 18/06, B02C 18/22, F16D 66/00, B02C 18/16

(54) **MACHINE AND METHOD FOR SHREDDING INORGANIC WASTE**
VORRICHTUNG UND VERFAHREN ZUR ZERKLEINERUNG VON ANORGANISCHEN ABFÄLLEN
MACHINE ET PROCÉDÉ DE BROYAGE DE DÉCHETS INORGANIQUES

(30) Priority: 20.05.2020 IT 202000011764
(43) Date of publication of application: 29.03.2023
(73) Proprietor: Frieco Societa' Benefit S.r.l., 20144 Milano (IT)
(72) Inventor: FRISINA, Roberto, 20144 Milano (IT); FRISINA, Danilo, 20144 Milano (IT)
(74) Representative: Garavelli, Paolo
(86) International application number: PCT/IT2021/050100
(87) International publication number: WO 2021/234744

(56) References cited:
- GB-A- 2 221 405
- US-A- 4 844 363
- US-A- 4 917 310
- US-A- 5 595 348
- US-A1- 2016 288 133

## Description

The present invention relates to a machine and a method for shredding inorganic waste with low power absorption. For inorganic waste we mean, for example, containers or packaging made of plastic, glass, metals, paper or cardboard, etc.

Various systems for the volumetric reduction of inorganic waste are known which are often used in industries or in recycling plants.

In particular, there are two different technologies: compaction and shredding.

The compaction is carried out substantially by crushing, by means of rollers or hydraulic presses, the material to be treated, thus obtaining a percentage of volumetric reduction that hardly exceeds 600; furthermore, the resulting product does not facilitate or in any case make the recycling chain that must be carried out in order to recover the material longer.

Shredding, on the other hand, allows to obtain a much greater volumetric reduction, even over 900. It is generally performed through the use of double/single/square shaft shredders with opposing blades, rotating in the opposite direction, or through the use of fixed blades and rotating blades.

The resulting material will in this case be composed of small fragments which, through the use of appropriate technologies, can make the recycling chain shorter.

These machines are therefore able to reduce the volume of inorganic waste. Conventional machines for shredding inorganic waste are disclosed in documents US5595348A and GB2221405A.

However, the shredding performed with the methods indicated above presents several critical issues which are mainly safety, noise, the high cost of construction and maintenance of the machines, the high shredding time, the possibility of jamming whose resolution requires rotation in the opposite direction, of the motor, the large dimensions of the machines themselves and the powers necessary for operation, which are in the order of tens of kW.

In industrial contexts the aforementioned criticalities can be negligible, or solved in different ways such as, for example, in the case of safety, where large hoppers and material insertion ducts are used, built in a particular way to prevent the staff from reaching the blades. of shredding.

Another aspect of the problem consists in the fact that the volume reduction operation by means of shredding plants is usually performed on the place where the recycling process is carried out. The waste materials as such are withdrawn from the streets, homes or various commercial activities and transported to the places where the treatments are carried out.

There are also other equipment for use in the vending sector or installed on public land or on commercial activities that allow the volumetric reduction of waste through the methods described above (compaction or shredding) which have other limits such as the possibility of treating a single type. waste (plastic only, glass only), or the possibility of inserting only bottles, one bottle at a time, maximum half-liter bottles or just coffee glasses.

In the case of machines to be installed in domestic users, the main limit, in addition to those indicated above, seems to be that of excessive current absorption, even in very small machines.

Object of the present invention is solving at least in part the aforesaid problems of the prior art, by providing a machine and a method for shredding inorganic waste, said machine being driven by an electric motor.

An object is to strongly limit the absorption of electrical power from the network, so that it can also be used in domestic users.

Another object is to provide safety systems which allow their safe use even by non-specialized persons.

The aforesaid and other objects and advantages of the invention, as will emerge from the following description, are achieved with a machine, according to claim 1, suitable for reducing the volume of inorganic waste by means of shredding, and a method, according to claim 8, adapted to allow the operation of said machine by limiting its absorption of electrical energy.

The machine is of the type comprising:
- first loading means, suitable for receiving the materials to be shredded and pouring them into a shredding chamber;
   - second shredding means, driven by a motor, suitable for shredding the materials introduced;
   - third unloading means, suitable for collecting the shredded materials;
   - fourth electronic means of controlling the operation of the machine;
   - -fifth means, controlled by said fourth electronic means, suitable for limiting the resisting torque applied to said motor, in such a way as to avoid current absorption that exceeds the capacity of the power supply network.

Said fifth means, adapted to limit the resisting torque applied to said motor, comprise, alternatively or both:
- one or more mobile elements, able to assume positions that allow the introduced materials to be gradually poured into the shredding chamber, so that the engine can be started empty or with minimum load;
- a plurality of knives which interact with each other to carry out the shredding of the materials introduced, said interaction being controlled in order to avoid excessive accumulations of material between said knives, so that the resistant couple, due to the cutting action, does not generate absorption of current, from the motor, higher than the capacity of the power supply network.

The method for limiting the power necessary to operate said shredding machine for inorganic materials, is characterized by limiting the development of resistant couples, due to the shredding action, which require current absorption that exceeds the capacity of the network. supply.

Said limitation of the development of resistant couples, due to the shredding action, is implemented:
- through a gradual pouring of the materials to be treated into said shredding chamber, allowing the engine to start with no load or with minimum load, said gradualness being obtained by a gradual rotation of said mobile element controlled by said fourth electronic means;
- through an intervention aimed at controlling any excessive accumulation of materials on said shredding means.

As will be seen in the following description of an application example, the technological limitations and drawbacks of the prior art are overcome, as the invention creates a machine with industrial performance but with dimensions and even domestic usability.

Preferred embodiments and non-trivial variants of the present invention form the subject of the dependent claims.

With a machine conforming to the invention, a real reduction of 85 ÷ 95% is obtained, in fact the scale cannot leave the grinding chamber until it reaches the predetermined size (about 1 cm).

Other advantages of the machine according to the invention are increased safety and a reduction in operating noise. Furthermore, the cost of production and maintenance is reduced, the shredding speed increases, the mechanism is avoided, it is possible to insert more waste at the same time with different types of waste, even large containers or packaging of various kinds. also flexible up to bags or whole bags.

This machine can be used both in the home and in commercial or industrial activities, appropriately scaling the size according to the customer's needs, thus introducing, within the recycling chain, the concept of volumetric reduction at the source, thus facilitating other recycling processes with a view to localized circular economy.

The repercussions in terms of environmental benefit are also of considerable importance, given by the lower pollution of the means of transport circulating on the roads, due to the fact that the volume reduction would be carried out before the transport itself.

It is understood that all the attached claims form an integral part of the present description.

It will be immediately obvious that innumerable variations and modifications (for example relating to shape, dimensions, arrangements and parts with equivalent functionality) can be made to what has been described without departing from the scope of the invention as appears from the attached claims.

The present invention will be better described by a preferred embodiment, provided by way of nonlimiting example, with reference to the attached drawings, in which:
- Figure 1 is a perspective view of the machine according to the invention;
- Figures 2 (a, b) are a diagram of the inside of the machine, according to a vertical and a horizontal plane passing through the axis of the knife holder rotor;
- Figures 3 (a, b, c) show three configurations of the loading system for the materials to be treated.

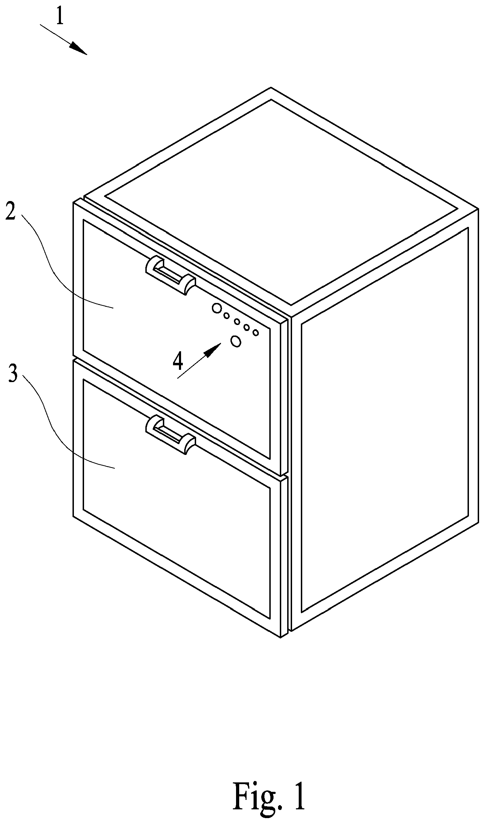

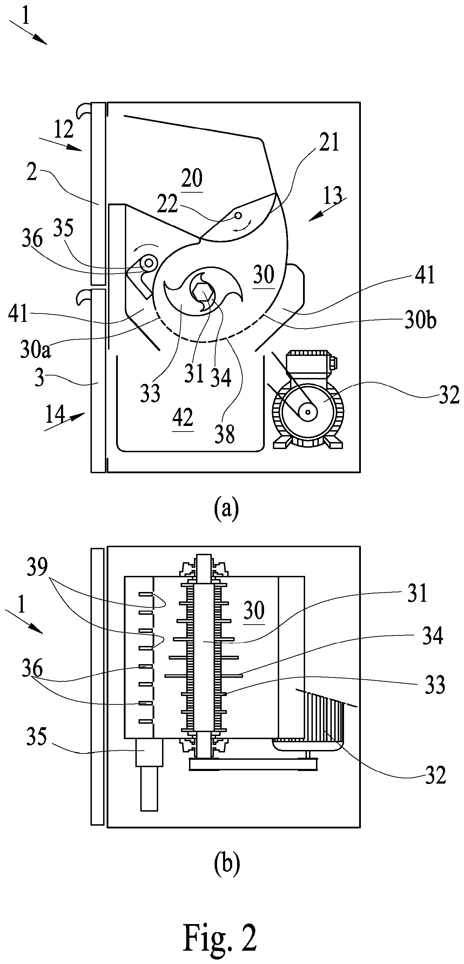

With reference to FIGS. 1 and 2, (1) designates a machine for shredding inorganic materials according to the invention.

According to a preferred embodiment, said machine (1) has compact dimensions and a design suitable for a home installation or in small commercial or artisan businesses, in which solid inorganic waste is produced.

The machine (1) is equipped with:
- an upper opening, closed by a first door (2), which allows the introduction of the materials to be shredded;
- a lower opening, closed by a second door (3), from which the shredded materials are extracted;
- a small control panel (4), positioned on the upper door (2), designed to signal the status of the machine (1) and any malfunctions as well as allowing the start-up and selection of the work cycle.

Both doors (2, 3) are equipped with an electric lock (not shown) that keeps them closed during the operation of the machine (1).

Said machine (1) includes:
- first loading means (12), suitable for receiving the materials to be shredded;
- second shredding means (13), suitable for shredding the introduced materials;
- third unloading means (14), suitable for collecting the shredded materials;
- fourth electronic control means (not shown) designed to regulate the operation of the machine;
- fifth means, controlled by said fourth electronic means, suitable for limiting the resistant torque due to shredding.

These fifth means include:
- one or more mobile elements (21), able to assume positions that allow the introduced materials to be gradually poured into the shredding chamber (30);
- a plurality of knives (33, 34, 36) which interact with each other to effect the shredding of the materials introduced.

The way the fifth means work will be clarified in the following.

Said first loading means (12) comprise said first door (2) which allows access to a large area (20), in which there is a sensor (not shown), to detect the presence of materials to be treated, said the loading area (20) being limited downwards by a movable element (21), rotatable around a pin (22), which has the main function of regulating the flow of the materials to be treated.

The element (21) has the sectional shape of an arc of circumference. This allows it to accommodate the materials to be treated in the concavity and to pour them easily into an underlying shredding chamber (30) by rotating around said pin (22).

According to another preferred embodiment, said mobile element (21) can be replaced by multiple mobile elements (not shown) designed to open the passage between the loading area (20) and the shredding chamber (30).

This and other functions of the mobile element (21) will be better specified below.

Said second shredding means (13) comprise:
- a shredding chamber (30), in which there is preferably a filling sensor (not shown), inside which there is a single shaft main rotor (31), driven by an electric motor (32), on said rotor main (31) being mounted a first series of larger knives (33) interspersed with a second series of minor knives (34), having shapes and distances suitable for shredding and dragging, avoiding the ball effect on said single shaft main rotor (31) );
- a rake (35) on which a third series of major knives (36) is mounted, possibly interspersed with a fourth series of minor knives (not shown), said knives (36) of the rake (35) interacting with said knives (33, 34) of the main rotor (31).

The wall of said shredding chamber (30), made of wear-resistant steel, comprises:
- a first section (30a), substantially circular in shape and having a center on the axis of said main rotor (31);
- a second section (30b), which is connected with said first section (30a), of a substantially circular shape, but with a greater radius than the previous one so as to increase the distance between the trajectory of the ends of the blades (33) and the wall of the shredding chamber (30);
- said movable element (21) which rotates around the pin (22) so as to open/close the passage between said loading area (20) and said shredding chamber (30).

In the lower part of the wall of the shredding chamber (30) a plurality of openings is made, so as to obtain a sort of evacuation net (38), suitable for letting the shredded material through, acting as a sieve that allows only the fragments that have reached a predetermined size, said openings being able to have various shapes (for example round, square, etc.) and dimensions.

The rake (35) is placed outside the shredding chamber (30), in correspondence with the main rotor (31) in order to interact with it. Said interaction occurs following a rotation of said rake (35) towards the main rotor (31) and the consequent insertion of the blades (36) of the rake (35) between the knives (33, 34) of the main rotor (31). Said insertion is made possible by suitable openings (39) made on the wall of the shredding chamber (30).

Alternatively, the rake (35) can be placed inside the shredding chamber (30); in this case said minor knives are present (not shown) and no openings are necessary in the wall of said shredding chamber to allow the knives (36) of the rake (35) to pass.

Furthermore, on the rake (35) there are sensors, able to identify both its position with respect to the main rotor (31), and the presence of any loads interposed in the movement that excessively hinder its rotation, causing an increase in the absorption of incompatible electrical power. with the capacity of the power supply network.

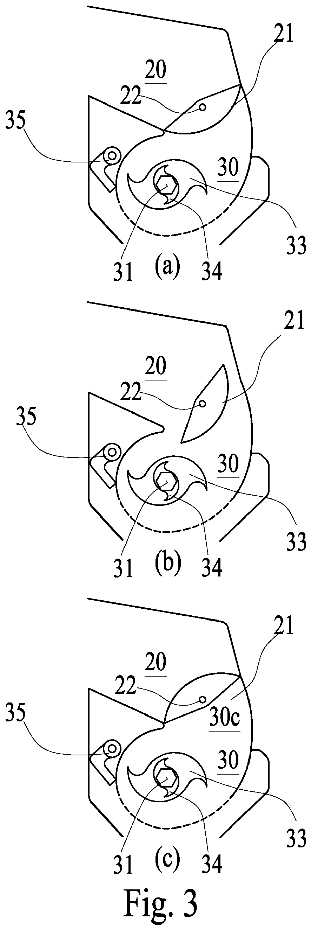

Said mobile element (21) can assume various positions, rotating around said pin (22):
- a first position, shown in FIG. 3a, in which the mobile element (21) has the concavity facing upwards and completely closes the passage between the loading area (20) and the shredding chamber (30);
- a second position, shown in FIG. 3b, in which the mobile element (21) opens the passage between the loading area (20) and the shredding chamber (30), allowing the loaded material to enter the shredding chamber (30), the passage from said first position to said second position being able to take place gradually; this will allow a progressive increase of the load on the shredding knives avoiding both too high starting torques, an excessive load of materials, and a block of the rotor (31), requiring high electrical power absorbed by the network; the rotation of the mobile element (21) is also a function of the size of the materials to be loaded, in fact by increasing the angle of rotation, the area of the passage section also increases;
- a third position, shown in FIG. 3c, in which the mobile element (21) rotates by 180°, completely closing the passage towards the loading area (20) and delimiting a large area (30c), inside the shredding chamber (30), in to which the materials projected by the centrifugal force, consequent to the strong rotation imparted by the main rotor (31), tend to accumulate dynamically; in practice, the materials partially shredded and projected by the centrifugal force tend to accumulate in the area (30c) of the shredding chamber (30), falling by gravity into the area below where they are hooked again by the knives (33, 34) of the main rotor (31) to pass between the knives (36) of the rake (35) and undergo a new shredding.

In addition to the functions described, said movable element (21) also has an important safety function, as it prevents access by hand to the shredding chamber (30) since the deposition of the materials in the loading area (20) takes place with the mobile element (21) in the closed position.

Furthermore, the mobile element (21) reduces the noise since, after the total discharge of the material present in the loading area (20) into the shredding chamber (30), it is arranged according to said third position so as to avoid the return of flakes towards the inlet and, being provided with suitable seals, also reduces the noise generated by crushing.

According to a preferred embodiment, the installation, inside the shredding chamber (30), of a suction system (not shown) of the dust that is generated in the shredding of some materials is provided.

Said third unloading means (14), for the collection of the shredded materials, comprise a jacket conveyor (41), positioned outside the shredding chamber (30). Said conveyor (41) is shaped in such a way as to receive the shredded material that comes out of the evacuation net (38) and to convey it towards a collection area, where a basket (42) is positioned. A level sensor (not shown) is positioned in the jacket (41) or in the basket (42) to detect the filling of the basket itself, to signal its status to an electronic control system.

There are also said fourth electronic means (not shown) able to receive signals from the various sensors in order to control the operation of the machine (1) and to emit alarm signals in case of malfunctions.

The operation of the machine (1), by implementing this method for limiting the absorption of electricity, is as follows.

After opening the upper door (2), the operator places the materials to be shredded in the loading area (20). These materials are collected in the concavity of the mobile element (21) (FIG. 3a). After loading, the upper door (2) is closed and the electric locks of both doors (2, 3) are activated. The mobile element (21) rotates gradually, preferably after the motor (32) has already been started with no load, in order to limit the current absorption at start-up. The rotation of the mobile element (21) around the pin (22) allows to open the passage between the loading area (20) and the shredding chamber (30), said rotation taking place with the necessary gradualness to avoid a too rapid insertion of the materials to be shredded. In this way, the power required by the system is limited and the use of lower power motors is made possible and, therefore, able to operate with the low electrical power installed in domestic users.

The material falling into the shredding chamber (30) is thrown by the knives (33, 34) of the main rotor (31) against the walls of the shredding chamber (30) itself. Driven by the rotation of the knives, the material circulates inside the shredding chamber (30) with a circular trajectory around the axis of the main rotor (31), passing several times between the blades of the main rotor (31) and those of the rake (35), breaking up further at each step. The circular trajectory causes it to be projected by centrifugal force against the walls of the shredding chamber (30); this fact allows the formation of said dynamic accumulation in the area (30a) of the shredding chamber (30) and facilitates the exit through the evacuation network (38), when the fragments have reached the desired size.

## Claims

1. Machine (1) for shredding inorganic waste, of the type comprising:
- first loading means (12), suitable for receiving the materials to be shredded and for pouring them into a shredding chamber (30);
- second shredding means (13), driven by a motor (32), suitable for shredding the introduced materials;
- third unloading means (14), suitable for collecting the shredded materials;
- fourth electronic means of controlling the operation of the machine;
- fifth means, controlled by said fourth electronic means, adapted to limit the resisting torque applied to said motor (32), in such a way as to avoid current absorption that exceeds the capacity of the power supply network, said fifth means comprising one or more elements movable (21), adapted to assume positions that allow the introduced materials to be gradually poured into the shredding chamber (30), so that the motor (32) can be started empty or with minimum load, said fifth means further comprising a plurality of knives (33, 34, 36) which interact with each other to carry out the shredding of the materials introduced, said interaction being controlled in order to avoid excessive accumulations of material between said knives (33, 34, 36), so as to prevent the resistant torque, due to the cutting action, generates current absorption by the motor (32) higher than the capacity of the power supply network;
wherein said second shredding means (13) comprise said shredding chamber (30) in which there is a main rotor (31), driven by a motor (32) and provided with a plurality of knives (33, 34) which interact with the knives (36) of a rake (35), said rake (35) being movable to bring said knives (36) to interact with said knives (33, 34) of said main rotor (31), the position of said rake (35) with respect to said main rotor (31) being adjustable so as to check that the resistant torque due to the cutting action of the knives generates current absorption by the motor (32) not exceeding the capacity of the power supply network ;
and wherein said shredding chamber (30) is limited by solid walls comprising:
- a first section (30a), substantially circular in shape and having a center on the axis of said main rotor (31);
- a second section (30b), which is connected with said first section (30a), of a substantially circular shape, but with a greater radius than the previous one so as to increase the distance between the trajectory of the ends of the blades (33) and the wall of the shredding chamber (30);
and **characterized in that**
- said movable element (21) which, after having poured the materials to be treated into the shredding chamber (30), is arranged in such a way as to close said shredding chamber (30);
-said mobile element (21) rotates around a pin (22) and has the sectional shape of an arc of circumference in such a way as to accommodate the loaded material in its concavity and:
- by rotating around said pin (22) up to about 90°, it adjusts the flow of the materials to be poured into the underlying shredding chamber (30);
- by rotating about 180° around said pin (22), it completely closes the passage towards the loading area (20), delimiting a large area (30c), inside the shredding chamber (30), in which the materials projected by the centrifugal force, consequent to the strong rotation impressed by the main rotor (31), they tend to accumulate dynamically and, falling by gravity into the area below, they are hooked again by the knives (33, 34) of the main rotor (31) to pass between the blades (36) of the rake (35) and undergo a new shredding, the formation of said dynamic accumulation by regulating the flow of material between the blades (33, 34, 36) avoiding that the current absorbed by the motor (32) is higher than the capacity of the power supply network.

2. Machine (1) for shredding inorganic waste, according to claim 1, **characterized in that** said first loading means (12) comprise a first door (2) which allows access to a loading area (20) for the insertion of the materials to be treated, said loading area (20) being limited by said one or more movable elements (21).

3. Machine (1) for shredding inorganic waste, according to claim 2, **characterized by** the fact that said door (2) is equipped with an electric lock designed to close automatically when the machine (1) is in operation.

4. Machine (1) for shredding inorganic waste, according to claim 2, **characterized by** the fact that inside said loading area (20) there is a sensor able to detect the presence of materials to be treated.

5. Machine (1) for shredding inorganic waste, according to claim 1, **characterized in that** a plurality of openings are made in the lower part of the wall of the shredding chamber (30), so as to obtain a sort of evacuation net (38), suitable for letting the shredded material through, acting as a sieve that allows only the fragments that have reached a predetermined size to pass.

6. Machine (1) for shredding inorganic waste, according to claim 1, **characterized in that** said third discharge means (14), suitable for collecting the shredded materials, comprise a jacket conveyor (41), positioned outside the shredding chamber (30) and in correspondence with said evacuation network (38), said conveyor (41) being shaped in such a way as to receive the shredded material that comes out of the evacuation network (38) and convey it to a collection area, where a basket (42) is positioned.

7. Machine (1) for shredding inorganic waste, according to at least one of claims 1 to 6, **characterized in that** it provides for the presence of one or more sensors on said rake (35), suitable for identifying both its position with respect to the rotor main (31), and the presence of any loads interposed in the movement that excessively hinder rotation causing an increase in electrical power absorption that is not compatible with the capacity of the power supply network.

8. Method for limiting the power necessary to drive a shredding machine (1) for inorganic materials, according to at least one of claims 1 to 7, suitable for limiting the development of resistant couples, due to the shredding action, which require current absorption that exceeds the capacity from the power supply network, said limitation of the development of resistant couples, due to the shredding action, being implemented through a gradual pouring of the materials to be treated in said shredding chamber (30), allowing a start-up with no load or with minimum load of the motor (32), said gradualness being obtained by a gradual rotation of said movable element (21) controlled by said fourth electronic means.

9. Method for limiting the power necessary to drive a shredding machine (1) for inorganic materials according to claim 8, suitable for limiting the development of resistant couples, due to the shredding action, which require current absorption that exceeds the capacity from the power supply network, said limitation of the development of resistant couples, due to the shredding action, is implemented through a retraction of the blades (36) of said rake (35) in case of excessive accumulated material between said knives (36, 37) of the rake (35) and the knives (33, 34) of said main rotor (31) .

## Patentansprüche

1. Maschine (1) zum Zerkleinern anorganischer Abfälle, umfassend:
- erste Lademittel (12), geeignet zum Aufnehmen der zu zerkleinernden Materialien und zum Einfüllen derselben in eine Zerkleinerungskammer (30);
- zweite Zerkleinerungsmittel (13), angetrieben durch einen Motor (32), geeignet zum Zerkleinern der eingeführten Materialien;
- dritte Entlademittel (14), die zum Sammeln der zerkleinerten Materialien bestimmt sind;
- viertes elektronisches Mittel zur Steuerung des Maschinenbetriebs;
- fünfte Mittel, die von den vierten elektronischen Mitteln gesteuert werden und geeignet sind, das auf den Motor (32) ausgeübte Widerstandsdrehmoment zu begrenzen, um eine Stromaufnahme zu vermeiden, die die Kapazität des Stromversorgungsnetzes übersteigt, wobei die fünften Mittel ein oder mehrere mobile Elemente umfassen (21), die in der Lage sind, Positionen einzunehmen, die es ermöglichen, dass die eingebrachten Materialien allmählich in die Zerkleinerungskammer (30) geschüttet werden, so dass der Motor (32) leer oder mit minimaler Last gestartet werden kann, wobei die fünften Mittel eine Vielzahl von Messern umfassen (33, 34, 36), die miteinander interagieren, um die Zerkleinerung der eingebrachten Materialien durchzuführen, wobei die Interaktion kontrolliert wird, um übermäßige Materialansammlungen zwischen den Messern (33, 34, 36) zu vermeiden und so das Paar zu verhindern Der Widerstand erzeugt aufgrund der Schneidwirkung eine Stromaufnahme durch den Motor (32), die größer ist als die Kapazität des Stromversorgungsnetzes.
wobei die zweiten Zerkleinerungsmittel (13) die Zerkleinerungskammer (30) umfassen, in der sich ein Hauptrotor (31) befindet, der von einem Motor (32) angetrieben wird und mit einer Vielzahl von Messern (33, 34) versehen ist, die mit dem zusammenwirken Messer (36) eines Rechens (35), wobei der Rechen (35) beweglich ist, um die Messer (36) mit den Messern (33, 34) des Hauptrotors (31) in Wechselwirkung zu bringen, die Position des Rechens (35). ) in Bezug auf den Hauptrotor (31) einstellbar ist, um zu steuern, dass das Widerstandsdrehmoment aufgrund der Schneidwirkung der Messer eine Stromaufnahme durch den Motor (32) erzeugt, die die Kapazität des Stromversorgungsnetzes nicht überschreitet;
und wobei die Mahlkammer (30) durch feste Wände begrenzt ist, die Folgendes umfassen:
- einen ersten Abschnitt (30a), der im Wesentlichen kreisförmig ist und auf der Achse des Hauptrotors (31) zentriert ist;
- einen zweiten Abschnitt (30b), der an den ersten Abschnitt (30a) anschließt und im Wesentlichen kreisförmig ist, jedoch einen größeren Radius als der vorherige aufweist, um den Abstand zwischen der Flugbahn der Enden der Messer (33) zu vergrößern, und die Wand der Zerkleinerungskammer (30);
und **dadurch gekennzeichnet, dass**
- das bewegliche Element (21), das nach dem Einfüllen der zu behandelnden Materialien in die Zerkleinerungskammer (30) so angeordnet ist, dass es die Zerkleinerungskammer (30) verschließt;
das bewegliche Element (21) dreht sich um einen Stift (22) und hat die Querschnittsform eines Umfangsbogens, so dass es das geladene Material in seiner Konkavität aufnimmt und:
- Durch Drehen um den Stift (22) bis etwa 90° reguliert er den Fluss der in die darunter liegende Zerkleinerungskammer (30) einzufüllenden Materialien;
- indem er sich um etwa 180° um den Stift (22) dreht, verschließt er den Durchgang zum Beschickungsbereich (20) vollständig und begrenzt so einen großen Bereich (30c) im Inneren der Zerkleinerungskammer (30), in den die von der Zentrifuge geschleuderten Materialien gelangen Durch die starke Rotation des Hauptrotors (31) neigen sie dazu, sich dynamisch anzusammeln und durch die Schwerkraft in den darunter liegenden Bereich zu fallen, wo sie erneut von den Messern (33, 34) des Hauptrotors (31) erfasst werden, um zwischen den Messern (36) des Rechens (35) hindurchzugehen und einer erneuten Zerkleinerung zu unterziehen, wobei die Bildung dieser dynamischen Ansammlung durch Regulierung des Materialflusses zwischen den Messern (33, 34, 36) verhindert, dass der vom Motor aufgenommene Strom (32) von höher auf die Kapazität des Stromversorgungsnetzes.

2. Maschine (1) zum Zerkleinern anorganischer Abfälle nach Anspruch 1, **dadurch gekennzeichnet, dass** die ersten Lademittel (12) eine erste Tür (2) umfassen, die den Zugang zu einem Ladebereich (20) zum Einlegen der zu füllenden Materialien ermöglicht behandelt, wobei die Ladefläche (20) durch das eine oder die mehreren mobilen Elemente (21) begrenzt wird.

3. Maschine (1) zum Zerkleinern anorganischer Abfälle nach Anspruch 2, **dadurch gekennzeichnet, dass** die Tür (2) mit einem elektrischen Schloss ausgestattet ist, das sich automatisch schließen kann, wenn die Maschine (1) in Betrieb ist.

4. Maschine (1) zum Zerkleinern anorganischer Abfälle nach Anspruch 2, **dadurch gekennzeichnet, dass** sich innerhalb des Ladebereichs (20) ein Sensor befindet, der das Vorhandensein von zu behandelnden Materialien erkennen kann.

5. Maschine (1) zum Zerkleinern anorganischer Abfälle nach Anspruch 1, **dadurch gekennzeichnet, dass** im unteren Teil der Wand der Zerkleinerungskammer (30) mehrere Öffnungen angebracht sind, um so eine Art Evakuierungsnetzwerk zu erhalten (38), das das zerkleinerte Material passieren lässt und wie ein Sieb wirkt, das nur die Bruchstücke durchlässt, die eine vorgegebene Größe erreicht haben.

6. Maschine (1) zum Zerkleinern anorganischer Abfälle nach Anspruch 1, **dadurch gekennzeichnet, dass** die dritten Entlademittel (14), die zum Sammeln der zerkleinerten Materialien geeignet sind, einen Mantelförderer (41) umfassen, der außerhalb der Zerkleinerungskammer positioniert ist (30) und in Übereinstimmung mit dem Evakuierungsnetz (38), wobei der Förderer (41) so geformt ist, dass er das zerkleinerte Material, das aus dem Evakuierungsnetz (38) kommt, aufnimmt und es zu einem Sammelbereich befördert, wo ein Korb ( 42) positioniert ist.

7. Maschine (1) zum Zerkleinern anorganischer Abfälle nach mindestens einem der Ansprüche 1 bis 6, **dadurch gekennzeichnet, dass** das Vorhandensein eines oder mehrerer Sensoren an dem Rechen (35) vorgesehen ist, die geeignet sind, seine Position in Bezug auf den Rechen (35) zu identifizieren zum Hauptrotor (31) und das Vorhandensein von Lasten im Uhrwerk, die seine Drehung übermäßig behindern, was zu einer Erhöhung der Stromaufnahme führt, die nicht mit der Kapazität des Stromversorgungsnetzes vereinbar ist.

8. Verfahren zur Begrenzung der zum Antrieb einer Zerkleinerungsmaschine (1) für anorganische Stoffe erforderlichen Leistung nach mindestens einem der Ansprüche 1 bis 7, geeignet zur Begrenzung der Entstehung von Widerstandspaaren aufgrund der Zerkleinerungswirkung, die eine Stromaufnahme erfordern die die Kapazität des Stromversorgungsnetzes übersteigt, wobei die Begrenzung der Entwicklung resistenter Paare aufgrund des Zerkleinerungsvorgangs durch ein allmähliches Einfüllen der zu behandelnden Materialien in die Zerkleinerungskammer (30) erreicht wird, wodurch ein Anfahren ermöglicht wird bei Leerlauf oder bei minimaler Belastung des Motors (32), wobei die Allmählichkeit durch eine allmähliche Drehung des beweglichen Elements (21) erreicht wird, die durch das vierte elektronische Mittel gesteuert wird.

9. Verfahren zur Begrenzung der zum Antrieb einer Zerkleinerungsmaschine (1) für anorganische Stoffe erforderlichen Leistung nach Anspruch 8, geeignet zur Begrenzung der Entstehung von Widerstandsmomenten aufgrund der Zerkleinerungswirkung, die eine über die Kapazität hinausgehende Stromaufnahme aus dem Vorrat erfordern Netzwerk, das als Begrenzung der Entwicklung von Widerstandspaaren aufgrund der Zerkleinerungswirkung bezeichnet wird und durch ein Zurückziehen der Messer (36) des Rechens (35) im Falle von überschüssigem Material, das sich zwischen den Messern (36, 37) angesammelt hat, umgesetzt wird Rechen (35) und die Messer (33, 34) des Hauptrotors (31).

## Revendications

1. Machine (1) de broyage de déchets inorganiques, du type comprenant:
- des premiers moyens de chargement (12), adaptés pour recevoir les matériaux à broyer et les déverser dans une chambre de broyage (30);
- des seconds moyens de broyage (13), entraînés par un moteur (32), adaptés pour broyer les matériaux introduits;
- des troisièmes moyens de déchargement (14), conçus pour collecter les matériaux broyés;
- un quatrième moyen électronique de contrôle du fonctionnement de la machine;
- des cinquièmes moyens, commandés par lesdits quatrièmes moyens électroniques, adaptés pour limiter le couple résistant appliqué audit moteur (32), de manière à éviter une absorption de courant dépassant la capacité du réseau d'alimentation, lesdits cinquièmes moyens comprenant un ou plusieurs éléments mobiles (21), capables de prendre des positions qui permettent de verser progressivement les matériaux introduits dans la chambre de broyage (30), de sorte que le moteur (32) puisse être démarré à vide ou avec une charge minimale, lesdits cinquièmes moyens comprenant une pluralité de couteaux (33, 34, 36) qui interagissent entre eux pour réaliser le broyage des matériaux introduits, ladite interaction étant contrôlée afin d'éviter des accumulations excessives de matière entre lesdits couteaux (33, 34, 36), de manière à empêcher la paire résistant, du fait de l'action de coupe, génère une absorption de courant par le moteur (32) supérieure à la capacité du réseau d'alimentation électrique;
dans lequel lesdits seconds moyens de déchiquetage (13) comprennent ladite chambre de déchiquetage (30) dans laquelle se trouve un rotor principal (31), entraîné par un moteur (32) et pourvu d'une pluralité de couteaux (33, 34) qui interagissent avec le couteaux (36) d'un râteau (35), ledit râteau (35) étant mobile pour amener lesdits couteaux (36) à interagir avec lesdits couteaux (33, 34) dudit rotor principal (31), la position dudit râteau (35) par rapport audit rotor principal (31), étant réglable de manière à contrôler que le couple résistant dû à l'action de coupe des couteaux génère une absorption de courant par le moteur (32) n'excédant pas la capacité du réseau d'alimentation électrique;
et dans lequel ladite chambre de broyage (30) est limitée par des parois pleines comprenant:
- un premier tronçon (30a), de forme sensiblement circulaire et centré sur l'axe dudit rotor principal (31);
- un deuxième tronçon (30b), qui se raccorde audit premier tronçon (30a), de forme sensiblement circulaire, mais de rayon plus grand que le précédent de manière à augmenter la distance entre la trajectoire des extrémités des couteaux (33) et la paroi de la chambre de déchiquetage (30);
et **caractérisé par le fait que**
- ledit élément mobile (21) qui, après avoir déversé les matières à traiter dans la chambre de broyage (30), est agencé de manière à fermer ladite chambre de broyage (30);
ledit élément mobile (21) tourne autour d'un axe (22) et présente en section une forme d'arc circonférentiel de manière à accueillir le matériau chargé dans sa concavité et:
- en tournant autour dudit axe (22) jusqu'à environ 90°, il régule le flux de matières à déverser dans la chambre de broyage sous-jacente (30);
- en tournant autour dudit axe (22) d'environ 180°, il obture complètement le passage vers la zone de chargement (20) délimitant une grande zone (30c), à l'intérieur de la chambre de broyage (30), dans laquelle les matériaux projetés par la centrifugeuse force, résultant de la forte rotation conférée par le rotor principal (31), ils ont tendance à s'accumuler dynamiquement et, tombant par gravité dans la zone située en dessous, ils sont à nouveau accrochés par les couteaux (33, 34) du rotor principal (31). pour passer entre les couteaux (36) du râteau (35) et subir un nouveau déchiquetage, la formation de ladite accumulation dynamique en régulant le flux de matière entre les couteaux (33, 34, 36) empêchant le courant absorbé par le moteur (32) d'être supérieur à la capacité du réseau d'alimentation électrique.

2. Machine (1) de broyage de déchets inorganiques selon la revendication 1, **caractérisée en ce que** lesdits premiers moyens de chargement (12) comprennent une première porte (2) qui permet d'accéder à une zone de chargement (20) pour l'insertion des matériaux à traité, ladite zone de chargement (20) étant limitée par lesdits un ou plusieurs éléments mobiles (21).

3. Machine (1) de broyage de déchets inorganiques selon la revendication 2, **caractérisée en ce que** ladite porte (2) est munie d'une serrure électrique capable de se fermer automatiquement lorsque la machine (1) est en fonctionnement.

4. Machine (1) de broyage de déchets inorganiques selon la revendication 2, **caractérisée par le fait qu'**à l'intérieur de ladite zone de chargement (20) se trouve un capteur adapté pour détecter la présence de matériaux à traiter.

5. Machine (1) de broyage de déchets inorganiques selon la revendication 1, **caractérisée par le fait que** dans la partie inférieure de la paroi de la chambre de broyage (30) sont pratiquées une pluralité d'ouvertures, de manière à obtenir une sorte de réseau d'évacuation. (38), conçu pour laisser passer les matériaux déchiquetés, agissant comme un tamis qui ne laisse passer que les fragments ayant atteint une taille prédéterminée.

6. Machine (1) de broyage de déchets inorganiques, selon la revendication 1, **caractérisée par le fait que** lesdits troisièmes moyens de déchargement (14), adaptés à la collecte des matériaux broyés, comprennent un convoyeur à chemise (41), positionné à l'extérieur de la chambre de broyage (30) et en correspondance dudit réseau d'évacuation (38), ledit convoyeur (41) étant conformé de manière à recevoir le matériau déchiqueté qui sort du réseau d'évacuation (38) et à l'acheminer vers une zone de collecte, où se trouve un panier (42) est positionné.

7. Machine (1) de broyage de déchets inorganiques selon l'une au moins des revendications 1 à 6, **caractérisée par** le fait de prévoir la présence d'un ou plusieurs capteurs sur ledit râteau (35), aptes à identifier à la fois sa position par rapport au rotor principal (31), et la présence d'éventuelles charges placées dans le mouvement qui gênent excessivement sa rotation, provoquant une augmentation de l'absorption de puissance électrique qui n'est pas compatible avec la capacité du réseau d'alimentation électrique.

8. Procédé pour limiter la puissance nécessaire à l'entraînement d'une machine de broyage (1) pour matériaux inorganiques, selon au moins l'une des revendications 1 à 7, adapté pour limiter le développement de couples résistants, dus à l'action de broyage, qui nécessitent une absorption de courant qui dépasse la capacité du réseau d'alimentation électrique, ladite limitation du développement de couples résistants, dus à l'action de broyage, étant mise en oeuvre par un déversement progressif des matériaux à traiter dans ladite chambre de broyage (30), permettant une mise en route à vide ou avec charge minimale du moteur (32), ladite progressivité étant obtenue par une rotation progressive dudit élément mobile (21) commandée par lesdits quatrièmes moyens électroniques.

9. Procédé pour limiter la puissance nécessaire à l'entraînement d'une machine de broyage (1) pour matériaux inorganiques selon la revendication 8, adapté pour limiter le développement de couples résistants, dus à l'action de broyage, qui nécessitent une absorption de courant dépassant la capacité de l'alimentation, réseau, appelé limitation du développement de paires résistantes, dû à l'action de broyage, étant mis en oeuvre par une rétraction des couteaux (36) dudit râteau (35) en cas d'excès de matière accumulée entre lesdits couteaux (36, 37) du râteau (35) et les couteaux (33, 34) dudit rotor principal (31).
